# EUROPEAN PATENT SPECIFICATION

(11) **EP 1 464 232 B1**
(45) Date of publication and mention of the grant of the patent: **11.07.2007**
(21) Application number: 04076058.9
(22) Date of filing: 02.04.2004
(51) Int. Cl.: A23C 19/16, A23L 1/00

(54) **Coating for foods**
Zusammensetzung zum Überziehen von Nahrungsmitteln
Produit d'enrobage de produits alimentaires

(30) Priority: 02.04.2003 NL 1023085
(43) Date of publication of application: 06.10.2004
(73) Proprietor: Friesland Brands B.V., 7943 PE Meppel (NL)
(72) Inventor: van Arem, Everhardus Jacobus Franciscus, 8802 CR Franeker (NL); Jongsma, Tjeerd, 6721 AA Bennekom (NL); Fischer, Sabine, 5731 TP Mierlo (NL)
(74) Representative: Winckels, Johannes Hubertus F.

(56) References cited:
- EP-A- 0 048 123
- EP-A- 1 051 903
- WO-A-01/04050
- WO-A-01/80658
- DE-B- 1 171 716
- DE-C- 931 327
- NL-C- 1 004 792
- US-A- 2 003 192
- US-A- 5 626 893
- US-A- 5 766 751
- US-B1- 6 274 162
- DATABASE FSTA [Online] INTERNATIONAL FOOD INFORMATION SERVICE (IFIS), FRANFURT/MAIN, DE; GALLI A ET AL: "Ways of controlling surface microflora on hard and semi-hard cheeses." XP002263076 Database accession no. 84-1-12-p2476 & INDUSTRIA DEL LATTE 1982 ISTITUTO DI MICROBIOL., AGRARIA E TECNICA, UNIV., MILAN, ITALY, vol. 18, no. 3/4, 1982, pages 59-71,

## Description

The invention relates to a coating for foods such as fruits and fruit products, meat products and specifically sausage, and preferably for cheese, as well as to processes for preparing and applying such coating. Further, the invention relates to a food and in particular cheese provided with such coating.

In the preparation of many foods, at some point the food is provided with a coating. One purpose of coatings on foods is to protect the foods from external influences, such as fluctuations in temperature and in the air humidity, and specifically from damages and microbial influences. The quality of a food, for instance taste, smell, freshness, mouthfeel, cuttability and storage life, is as a rule positively influenced by a coating, a coating layer or any other barrier to the environment.

Further, a coating on foods can play a role in the control and influencing of the ripening process. This role specifically imposes requirements on the gas barrier and moisture barrier properties of the coating. For instance, for ripening cheese of the hard or half-hard type, a particular extent of exchange of gases between the (young) cheese and the environment is required. At the same time, a part of the moisture present in the cheese, substantially water, egresses.

For a number of reasons, it is desirable to maintain a higher moisture content in cheese.

On the one hand, a higher moisture content in cheese provides advantages in the ripening process; microbiological ripening processes in which enzymes play an important role proceed better in an aqueous medium than in a somewhat drier environment. On the other hand, the egress of moisture, in particular water, has as an effect that the amount of cheese that is prepared from a liter of milk decreases. Moreover, due to the egress of water, for instance the cuttability of older cheeses decreases: older cheeses become more granular and crumbly.

In the food industry, coverings have been proposed from many different materials, which may or may not be pre- and/or post-treated. Thus, traditionally, guts and other entrails have been used, for instance, to package meat products to form sausage. Also, the use of plastic films and gel forming compositions as covering is generally known.

In the cheese industry, coatings are usually based on materials consisting of a phase, such as paraffin or wax coatings, or of emulsions which are typically applied or arranged in more layers, for instance the so-called cheese plastics.

The present invention is directed in particular to a coating of the emulsion type for foods, but is not limited thereto. Also coverings based on, for instance, combinations of dry materials, emulsions and single-phase systems, which are applied in a desired and suitable order, fall within the scope of the invention.

Known emulsion coatings - which, for that matter, with the modification according to the invention, form a basis of the products according to the invention, can for instance be based on polysaccharides (see for instance EP-A-0 615 691, in which an alginate-based coating layer is described), proteins (see for instance EP-A-0 593 123, in which gluten, a water-insoluble protein, is used and EP-A-0 594 258, in which a coating based on caseinate is described), polyvinyl acetate or polyethylene. Such emulsions can be provided on foods by repeatedly applying a layer of aqueous emulsion thereto, which layer hardens through evaporation of water. Contacting foods with the emulsion can be done by dipping or spraying the food, or applying the emulsion with a sponge or brush, etc.

It is an object of the present invention to apply a (multilayer) material or combination of materials of desired properties to a food in a simple and efficient manner.

Specifically, the invention contemplates providing a food coating whose gas and/or liquid barrier properties can be controlled. For instance, a cheese coating can be provided for, whose gas diffusion properties are not adversely affected and whose moisture loss is limited. On the other hand, the moisture and gas barrier properties can also be so controlled that both are limited.

Presently, it has been found that advantages are obtained by including, for instance admixing, dispersing or otherwise introducing, particles from a water-swellable sheetlike material, and specifically such water-swellable particles, such as clay types, in a basic coating for foods. Specifically, it has been found that foods, such as cheese, which are covered with a coating in which water-swellable clay types or other water-swellable particles from a sheetlike material have been included, exhibit significant decreases in water loss compared with foods possessing a corresponding coating in which no clay has been included. Thus, it has been found, for instance, that three months after the application of the cheese coating according to the invention to a cheese, the moisture loss of that cheese is at least 5%, and typically at least 10%, less than in the case of a cheese which has a same cheese coating without the clay.

In a first aspect, the invention concerns a process for coating a cheese, comprising applying thereto an aqueous film forming composition and allowing this composition to dry and applying food-compatible water-swellable particles from a sheetlike material, and specifically such water-swellable clay particles of the type bentonite, montmorillonite, saponite, hectorite, fluorohectorite, beidellite, nontronite, vermiculite, halloysite and/or stevensite.

Preferably, as aqueous composition, an emulsion of film forming material is used, in which 0.5-25 wt.%, preferably 0.5-15 wt.% and most preferably 1-7wt.%, based on the weight of the film forming material, of the water-swellable particles is included.

In a second preferred embodiment, the water-swellable sheetlike material, and specifically the clay material, is added in a separate step. It is then preferred to apply the material particles to the food as dry powder before or after the application of the aqueous composition to the food and optionally to remove redundant powder, for instance by tapping, blowing or vibrating it off. After allowing the dry particles, and specifically the clay particles, to swell, for which purpose optionally an amount of water is applied, then, optionally, a layer of film forming material can be applied.

Thus, to a cheese, one or more layers of a conventional cheese coating agent, for instance of the known above-described types as of polyvinyl acetate, can be applied. Subsequently, onto the still wet layer, a dry powder of a water-swellable sheetlike clay, such as bentonite, is strewn, for instance using a sieve..The thus treated cheese is dried, which can for instance take place overnight. After this, the excess clay is removed from the cheese coating, advantageously by wiping or vibrating it off, after which a second layer of conventional cheese coating agent is applied.

Incidentally, the particles from sheetlike material, such as the clay particles, can also be applied in an aqueous dispersion, separately from the film forming material, for instance so as to form a similar intermediate layer to that described in the preceding paragraph.

In a further aspect, the invention concerns an emulsion (or dispersion or colloidal solution) for use as aqueous composition in the process according to the invention, comprising, in aqueous medium, particles of a film forming material and 0.5-25 wt.%, based on the weight of the film forming material, of food-compatible water-swellable particles from a sheetlike water-swellable material and specifically clay particles of the type, of the type bentonite, montmorrilonite, saponite, hectorite, fluorohectorite, beidellite, nontronite, vermiculite, halloysite and/or stevensite the montmorrillonite being in the sodium form and having an ion exchange capacity of 30-250 meq./100g of clay.

A next aspect of the invention concerns a process for preparing an emulsion for coating foods according to the invention, wherein the particles from sheetlike material and specifically the clay particles, are distributed uniformly in a conventional coating material for foods, comprising film forming particles in water, in an amount of 0.5-25 wt.%, based on the weight of the film forming material.

Furthermore, the invention concerns the use of water-swellable particles from sheetlike material and specifically clay particles of the type bentonite, montmorrilonite, saponite, hectorite, fluorohectorite, beidellite, nontronite, vermiculite, halloysite and/or stevensite in a food coating from a film forming material for the retention of moisture in the food. More in detail, this means that when the particles are present in a particular coating, less moisture egresses, at least such moisture egresses more slowly in the course of time than when the same coating is used without clay particles. It is supposed - without wishing to be limited to any theory, though - that due to the presence of sheetlike particles, the path length which the moisture must travel to be able to egress from the coating is increased considerably. For that matter, the coating according to the invention can also be composed such that also ingress or egress of gases, and specifically oxygen, into or out of the food is hindered, depending on the concentration of the sheetlike material, and this coating is therefore also applicable, in principle, as a barrier layer to gases and in particular to oxygen.

Additionally, the invention relates to a food and specifically a cheese, such as a cheese of the hard or half-hard type, obtainable according to the process of the invention.

The particles of a film forming material which are used according to the invention are typically conventional materials for preparing a coating on foods such as cheese. The coating can be formed both on the basis of synthetic polymers, and on the basis of natural polymers such as polysaccharides or proteins. Very suitable is the use of polyvinyl acetate particles which are conventionally used as cheese coating, for instance the product CESKA WL 250, which is commercially available from CSK Netherlands.

Other suitable plastic materials include shellac, ethylene/vinyl acetate copolymer (EVA) (see for instance EP-A-1 151 671), acetic acid esters, monoglyceride fatty acids (see for instance EP-A-0 679 337), polyhydroxyalkanoate (see for instance US-A-2002068810 and US-A-5,958,480), polysaccharides (see for instance EP-A 0 594 258 and EP-A-0 615 696), proteins (see for instance WO 01/80658, which, incidentally, also teaches the use of talc as filler; EP-A-0 593 123 and EP-A-0 594 258) and polyethylene and acrylate emulsions. The publications mentioned are incorporated in the present description by reference for further describing the coating compositions.

Conventional concentrations of these film forming particles in the aqueous base are not particularly critical and can be, for instance, between 1 and 80 wt.%. However, to render the process practically feasible, specifically in view of the drying time, contents of 20-70 wt.% and preferably 30-60 wt.% of film forming material in the aqueous solution are preferred.

Incidentally, it is known from the prior art to add clay particles to plastic material, both as (inert) filler and as component modifying the properties of the plastic material. This often involves so-called nanocomposite materials.

Thus, in WO-A-01/68762 the addition of clay to a biologically degradable thermoplastic material is described, to which, further, a plasticizer is added. It is indicated that an enhanced moisture barrier is obtained, so that the biodegradable material, for instance starch, remains form-stable in water.

The international patent application WO-A-01/04050 concerns a so-called nanocomposite coating and the preparation thereof. A layered material, for instance a natural or synthetic clay, is added as filler to a polymer. This is done using a modifying material, because *a priori* inorganic materials and polymers do not properly mix. This phenomenon is caused by, respectively, the hydrophilic and hydrophobic character of the components. More particularly, a modifying agent is added which contains two ionic groups, which groups are separated from each other by at least four non-ionic atoms. Partly because of this, specific requirements are imposed on the preparation of such nanocomposite.

In WO-A-01/04216 the addition of a clay to a polymeric matrix is additionally used to color the polymer. Through the better (time and UV) stability of inorganic dyes, which are fixed on the surface of the clay particles, thus a suitable alternative dye is at hand, which in addition possesses other desirable properties.

Further, Dutch patent 1004792 discloses a cheese coating agent from a liquid coating agent with a filler therein. Examples of those fillers are zeolite and talc. The use of sheetlike clay as a filler is advised against, because this leads to unduly great viscosity changes in the liquid coating agent.

In DE-AS-1 171 716 the use of talc is described. The talc here serves to set a desired pH at the surface of cheese.

In US-A-2,003,192 water- and airtight latex compositions are described which can applied to, for instance, eggs, sausage and smoked products. In these latex compositions, kaolin may be present as filler.

The German "Patentschrift" 931,327 describes that cheese rinds can be treated in a salt bath whose pH has been set with water glass. For the purpose of water extraction in particular cheeses, such as Gorgonzola and Roquefort, additionally a highly absorbing substance may be added to the cheese coating agent, such as silicates and clay soil in colloidal-fine form.

Applicant's EP-A-1 051 903 also describes the use of fillers in cheese coating layers. Talc, zeolite and orthosilicate are mentioned as examples of fillers.

U.S. Patent 6,274,162 discloses a coating system in which talc, colloidal silica or stearic acid may be present as lubricant.

U.S. Patent 5,766,751 concerns laminate films containing an inorganic component, which component has an aspect ratio of 50-5000. Use for foods is not described.

A good general example from the literature about the behavior of clay in an emulsion is to be found in the article "B. zu Putlitz, K. Landfester, H. Fischer, M. Antonietti, Adv. Mater. 2001, 13 No. 7, 500-503".

In the coating such as it is created according to the invention, particles are present of substantially food-compatible sheetlike material. More in detail, sheetlike is understood to mean particles whose (crystal) structure consists of relatively simply cleavable layers, both natural and synthetic materials, and specifically clay particles of the type bentonite, montmorrilonite, saponite, hectorite, fluorohectorite, beidellite, nontronite, vermiculite, halloysite and/or stevensite, and that is what the following description focuses on by way of example. It is explicitly indicated that where clay particles are mentioned, many of the advantages are also obtained for other particles from water-swellable sheetlike material. The clay particles that are used in the emulsion according to the invention are natural or synthetic clay particles and preferably based on layered silicates, such as clay particles of the smectic type. Typical properties of clay are the layered structure and the possibility of binding cations to the loaded surface and exchanging them with the medium in which the clay is contained. The cation exchange capacity (CEC, defined in milliequivalents [mol] per 100 grams of dry clay) is an important parameter of the clay in relation to the behavior of that clay in an aqueous medium. Clays suitable for nanocomposite materials have a layered structure and a cation exchange capacity of 30-250 milliequivalents per 100 grams, with a preference for a CEC of 50-150 meq/100g. Suitable types of clay particles are described in the above-discussed international patent applications and specifically in WO-A-99/07790. In the embodiments of the present invention, the clay particles are particles of the types of bentonite, montmorillonite, saponite, hectorite; fluorohectorite, beidellite, nontronite, vermiculite, halloysite and/or stevensite. Preferably, these types can be initially provided in the sodium form and preferably they can have an ion exchange capacity of 50-150 meq./100g of clay. In view of the use of the clay particles in a material for coating a food, the clays that are used are preferably not in a form that may give rise problems from the viewpoint of food technology. Specifically, (cat)ions present in the clays should not give any toxic effects. As a rule, the coating materials used will meet the legal requirements imposed on food products.

According to the invention, a major advantage is to limit the moisture loss in the preparation of foods, such as cheese, and specifically in the ripening and storage thereof, in, for instance, a cheese store. This aspect of the invention will be described hereinbelow in detail for cheese of the hard or half-hard type, but is not limited to application to cheese. Specifically, in a preferred embodiment, the invention provides a coating for cheese which on the one hand does not adversely affect the gas diffusion and on the other hand limits moisture loss.

Specifically, it has been found that in cheeses covered with a coating in which water-swellable clay types of the type bentonite, montmorrilonite, saponite, hectorite, fluorohectorite, beidellite, nontronite, vermiculite, halloysite and/or stevensite are dispersed, significant reductions in water loss occur, in comparison with cheeses possessing a similar coating, in which no clay is included. More particularly, it has been found that over a period of three months after the application of the coating according to the invention to the cheese, the moisture loss of that cheese is at least 5%, and typically at least 10%, less than in the case of a cheese having a same coating without the clay; it is self-evident that the same effect is achieved over a longer period. In other words, the cheese continues to lose a considerable amount of moisture over time. However, by the use of the coating, the moisture loss is fractionally limited, measured at any point in time. Such an effect is generic for the coating of the present invention. Through addition of specific types of clay, if desired, an esthetic effect can be accomplished as well, for instance by imparting a particular color to the coating via the clay.

In a preferred embodiment, the emulsion according to the invention comprises 0.5-25 wt.% and preferably 1-7 wt.%, based on the weight of the film forming material of water-swellable particles from sheetlike material. Very good results are achieved with an amount of about 5 wt.% of clay particles, based on the total dry matter content.

The emulsion, or perhaps better, the suspension according to the invention requires as essential ingredients in water conventional film forming material particles and food-compatible water-swellable clay particles of the type bentonite, montmorrilonite, saponite, hectorite, fluorohectorite, beidellite, nontronite, vermiculite, halloysite and/or stevensite. These particles can be introduced into the aqueous coating for foods in the form of a dry powder, but can also be first subjected to a step whereby the particles are allowed to swell in water, after which the particles in swollen condition are introduced into the aqueous coating for foods. The aqueous coating for foods and the clay particles are subsequently mixed with conventional agents, until no separate clay agglomerates can be distinguished anymore and thus a homogeneous, uniform coating emulsion is obtained. This emulsion can be prepared by mixing the dry powder into the coating with stirring (200-20,000 rpm) for 10-15 min. The clay particles, can also be first introduced into small amounts of water (50:50) in order to swell and then be added to the coating emulsion. Also, the clay can be mixed in small amounts into the coating (master batch preparation). This is followed by diluting this master batch with coating to the desired concentration. During stirring, air bubbles may be formed in the mixture, which can be removed by means of deaeration under vacuum.

As stated, the emulsion or suspension for coating foods according to the invention comprises, in an aqueous medium, film forming material particles and 0.5 to 25 wt.% of clay particles. Depending on the manner in which the clay is processed, it is preferred to choose a higher or lower concentration. If, for instance, the clay is included in an emulsion coating composition on foods, an amount of 0.5 to 15 wt.% is suitable. If the conventional method for applying a cheese coating from an emulsion is employed, an amount of 0.5 to 8 wt.% of clay particles is realistic. If the clay is applied as a paste, an amount of 15 wt.% is a guideline, whereas amounts of up to 25 wt.% are possible when the clay is applied in powder form to a wet emulsion of film forming material.

For coating foods, such as cheese, comprising applying to a food a layer of an emulsion according to the invention and subsequently allowing that layer to dry, the steps of this process will as a rule be repeated a few times in order to obtain a neat uniformly applied and sufficiently thick coating on the food. Incidentally, in practice, often the food will first be treated with the emulsion on a portion of the surface and the food will be turned after drying of the emulsion to treat the residual part with the emulsion.

The foods, such as cheeses, that can be obtained according to the process of the invention have a lower moisture loss and hence a higher moisture content than corresponding foods of the same age, form and weight, where no clay particles are present on the foods. More moisture means, first of all, a better ripening and hence also a better taste. Further, fewer essential aroma and odor substances are lost. Furthermore, the cheeses according to the invention are smoother compared with reference cheeses not treated according to the invention, and a higher yield is achieved. Further, specifically older cheeses according to the invention can be cut better than the reference cheeses.

Therefore, the invention also relates to a cheese of the hard or half-hard type, provided with a coating, which coating, based on the weight of the cheese plastic particles, comprises 0.5-25 wt.% of clay particles of the type bentonite, montmorrilonite, saponite, hectorite, fluorohectorite, beidellite, nontronite, vermiculite, halloysite and/or stevensite.

In the composition that is used for coating foods according to the invention, conventional additives and processing aids in this field can be added. Specifically, colors and preservatives can be used.

The emulsion according to the invention can be applied with the aid of the conventional procedures for applying coating to foods. Thus, the emulsion can be applied with a sponge or brush, by dipping and by spraying.

When dry clay particles are applied to the food in the form of a powder, the moisture present in the food initially provides for the mutual adhesion of the dry clay and the adhesion to the food. Excess clay can subsequently be removed. Next, a standard coating can be applied according to the conventional manner. These steps can be repeated as often as necessary to obtain a good coating. The powdered clay may equally well be applied to the still wet standard coating, which in this case has been applied first. The steps of applying clay powder and standard coating are mutually interchangeable in order.

The invention will presently be further elucidated in and by the following, non-limiting examples. In these examples, a natural clay of the montmorillonite type was used. The clay in question is a generally available sodium-bentonite clay having an ion exchange capacity of 110 meq./100g (110 milliequivalents per 100 g of clay).

Other experiments were carried out with a synthetic clay. The clay involved is a Laponite RD clay, synthetic silicate with a layered structure-hectorite type, ion exchange capacity of 55 meq./100 g of clay from the firm of Rockwood Additive Limited.

The weight percentages of clay particles are always based on the weight of the film forming material, unless specified otherwise.

### Example 1

A mixing vessel was filled with 3 kg of a standard coating for foods such as cheese (the polyvinyl acetate latex CESKA WL 250 from CSK (Netherlands)). Next, to the coating, slowly 90 g of the above-described natural sodium-bentonite clay were added, while the mixture is being stirred in the mixing vessel of a Hobart Planetary mixer. The whole mixture was subsequently stirred at a low speed (300-500 rpm) for 15 minutes, yielding a homogeneous mass. The formation of a homogeneous mass was visually observed; there were no clay lumps to be seen anymore. This clay-enriched coating for cheese was ready to be applied to cheeses.

### Example 2

Ninety grams of the above-described natural sodium-bentonite clay were mixed with 90 g of water in a Hobart Planetary mixer at a stirring speed of 200 rpm. The clay swelled in the process. Added to this swollen clay mass, while stirring in the Hobart mixer at 300-500 rpm, were 3 kg of the standard coating on foods described in Example 1. As a result, the viscosity of the mixture increased strongly; a thick paste was obtained. It was too thick to be applied to a cheese. For that reason, 1000 ml of extra water were added to the mixture to facilitate application of the coating to the cheese.

### Example 3

A stainless steel cup was filled with an amount of standard cheese coating agent CESKA WL 250 from CSK. Next, to this cheese coating agent with a solids content of about 40 wt.%, with stirring, an amount of the above-described natural sodium-bentonite clay was added, yielding a concentration of 5 wt.% of clay relative to the total solids content. The amount of clay was slowly added while the latex was stirred with an impeller disc, at a stirring speed of about 5,000 rpm. After the clay was added, it was further dispersed by raising the stirring speed to 10,000-12,000 rpm, for about 15 minutes.

The homogeneous dispersion formed was subsequently deaerated in a vacuum dissolver with slow stirring (about 5,000 rpm) with an impeller disc, whilst applying a vacuum for 3 to 5 minutes.

The thus obtained homogenous, 5 wt.% clay-containing cheese coating agent was suitable for application to cheeses.

### Example 4

A stainless steel cup was filled with an amount of standard cheese coating agent, a latex based on polyvinyl acetate CESKA WL 250. To this cheese coating agent with a solids content of about 40 wt.%, with stirring of the cheese coating agent, an amount of the above-described natural sodium-bentonite clay was added, yielding a concentration of 15 wt.% of clay relative to the total solids content. The amount of clay was slowly added while the latex was stirred with an impeller disc, at a stirring speed of about 16,000 rpm, until a homogeneous paste was formed.

A second stainless steel cup was filled with an amount of standard cheese coating agent. To this latex, an amount of paste was added, yielding a concentration of clay in the cheese coating agent of 1 wt.% relative to the total solids content. The paste was mixed with the cheese coating agent by slowly stirring with an impeller disc, at a stirring speed of 3,000-5,000 rpm.

The homogeneous dispersion formed was subsequently deaerated in a vacuum dissolver by slowly stirring (3,000-5,000 rpm) with an impeller disc while applying a vacuum for 3 to 5 minutes. The thus obtained homogeneous, 1 wt.% clay-filled cheese coating agent was suitable for application.

### Example 5

A stainless steel cup was filled with an amount of standard cheese coating agent, a latex based on polyvinyl acetate CESKA WL 250. Next, to this cheese coating agent with a solids content of about 40 wt.%, while stirring the cheese coating agent, an amount of synthetic Laponite RD clay with an ion exchange capacity of 55 meq./100 g of clay was added, yielding a concentration of 5 wt.% of Laponite RD relative to the total solids content. The amount of Laponite RD was slowly added while the latex was stirred with an impeller disc, at a stirring speed of about 5,000 rpm. After the clay was added, it was further dispersed by raising the stirring speed to 10,000-12,000 rpm for about 15 minutes.

The homogeneous dispersion formed was subsequently deaerated in a vacuum dissolver by slowly stirring (about 5,000 rpm) with an impeller disc while applying vacuum for 3 to 5 minutes. The now obtained homogeneous, 5 wt.% Laponite RD-filled cheese coating agent was suitable for application.

### Example 6

A stainless steel cup was filled with 540 g of demineralized water. To this water, while stirring with a propeller mixer (1200 rpm), 40 g of the above-described natural bentonite were added. This clay suspension (7 wt.% of clay) is suitable to be applied to the cheeses by the standard method.

### Example 7

A stainless steel cup was filled with 555 g of demineralized water. To this water, while stirring with a propeller mixer (1200 rpm), 11 g of the above-described synthetic Laponite RD clay were added. This clay suspension (2 wt.% of clay) is suitable to be applied to the cheeses by the standard method.

### Example 8

The coatings obtained in Examples 1 and 2 were applied to 4 kg of brine-dry model Gouda cheeses in a traditional manner with the aid of a sponge, on one half side thereof. After 24 hours, the applied layers proved sufficiently dry and the cheeses were turned over for the other half side to be provided with a coating layer as well. The cheeses were stored in a cheese store on wooden shelves using otherwise conventional ripening conditions and conventional treatments such as periodic turning over. In total, in 8 steps, 4 layers of coating were applied on each side over a period of 4 weeks.

The cheeses that had been prepared according to the above description were subsequently compared with each other, and with a cheese covered with the standard coating. Through weighing before and after the coating treatment, the applied amount of coating material could be compared with that on cheeses treated with the standard coating on foods without addition.

For a period of 3 months (90 days), the cheeses were stored and treated in a conventional manner. During this period, the weight of the cheeses was regularly determined, to enable determination of the moisture loss. By the end of the test period, depending on the applied amount of coating, all cheeses had, to a greater or lesser extent, a smooth rind and not any cheese exhibited any visible signs of fungal development.

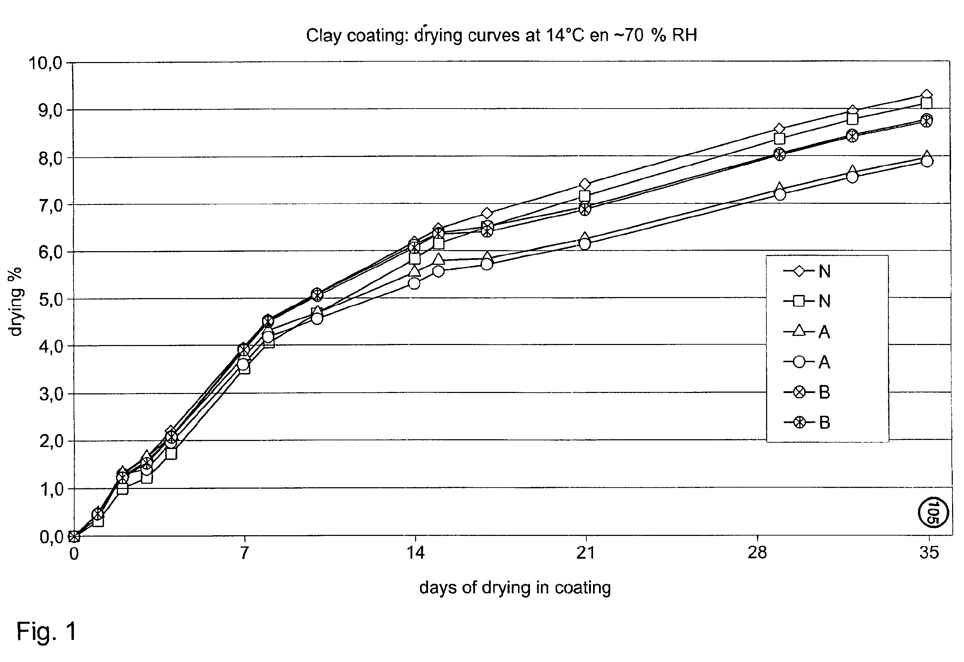

The cheeses according to the invention had lost significantly less water in comparison with standard cheeses to which a same coating had been applied though without the clay material. In this connection, reference is made to Fig. 1, in which the curves designated "N", "A" and "B" are the curves for, respectively, the reference cheese, the cheeses treated with the material of Example 1 and the cheeses treated with the material of Example 2 (in each case determinations in duplicate). The cheeses according to the invention lost up to some 20 wt.% less moisture compared with the reference cheese in the period mentioned.

## Claims

1. A process for coating a cheese, comprising applying thereto an aqueous film forming composition and allowing this composition to dry, and applying food-compatible particles from a sheetlike water-swellable material, and specifically water-swellable clay particles of the type bentonite, montmorillonite, saponite, hectorite, fluorohectorite, beidellite, nontronite, vermiculite, halloysite and/or stevensite.

2. A process according to claim 1, wherein as aqueous composition an emulsion of film forming material is used in which 0.5-25 wt.%, based on the weight of the film forming material, of the water-swellable particles are included.

3. A process according to claim 1, wherein as the aqueous film forming composition a composition is used in which 0.5-15 wt.% and preferably 1-7 wt.%, based on the weight of the film forming material, of the water-swellable clay particles are included.

4. A process according to claim 1, wherein the water-swellable clay particles are applied in the form of dry clay powder.

5. A process according to any one of claims 1-4, wherein as film forming composition an aqueous emulsion is used of plastic coating particles selected from particles of a material from the group consisting of polyvinyl acetate, ethylene-vinyl acetate copolymer, acetic acid esters, monoglyceride fatty acids, polyhydroxyalkanoate, polysaccharide, protein, polyethylene, poly(meth)acrylate as well as mixtures thereof.

6. A process according to claim 1, wherein as clay particles clays in the sodium form having an ion exchange capacity of 30-250 meq./100 g of clay and preferably 50-150 mel./100 g of clay are used.

7. A process according to any one of the preceding claims, wherein applying the aqueous film forming composition and allowing it to dry is repeated a few times.

8. An emulsion to be used as aqueous composition in the process according to claim 2, comprising in an aqueous medium particles of a film forming material and 0.5-25 wt.%, based on the weight of the film forming material, of food-compatible water-swellable clay particles wherein the clay particles are particles of the type bentonite, montmorillonite, saponite, hectorite, fluorohectorite, beidellite, nontronite, vermiculite, halloysite and/or stevensite, the montmorillonite being in the sodium form and having an ion exchange capacity of 30-250 meq./100 g of clay.

9. An emulsion according to claim 8, comprising 0.5-15 wt.% and preferably 1-7 wt.%, based on the weight of the film forming material, of the clay particles.

10. An emulsion according to claim 8 or 9, wherein the particles of film forming material are particles of a material selected from the group consisting of polyvinyl acetate, ethylene/vinyl acetate copolymer (EVA), acetic acid esters, monoglyceride fatty acids, polyhydroxyalkanoate, polysaccharides, proteins, polyethylene and poly(meth)acrylate and mixtures thereof.

11. An emulsion according to claim 8, wherein the clay particles are clay particles in the sodium form of natural and/or synthetic origin, having an ion exchange capacity of 30-250 meq/100g of clay, preferably 50-150 meq./100 g of clay.

12. A process for preparing an emulsion for coating foods according to any one of claims 8-11, wherein the sheetlike clay particles are uniformly distributed in a conventional coating material for foods, comprising film forming particles in water, in an amount of 0.5-25 wt.%, based on the weight of the film forming material.

13. A cheese obtainable according to the process according to any one of the claims 1-7.

## Patentansprüche

1. Verfahren zum Beschichten von Käse, umfassend das Aufbringen einer wäßrigen filmbildenden Zusammensetzung und das Trocknenlassen dieser Zusammensetzung, und das Aufbringen lebensmittelverträglicher Teilchen aus einem flächenförmigen wasserquellbaren Material, und insbesondere wasserquellbarer Lehmteilchen vom Typ Bentonit, Montmorillonit, Saponit, Hectorit, Fluorohectorit, Beidellit, Nontronit, Vermiculit, Halloysit und/oder Stevensit.

2. Verfahren gemäß Anspruch 1, worin als wäßrige Zusammensetzung eine Emulsion eines filmbildenden Materials verwendet wird, in der 0,5 bis 25 Gew.%, bezogen auf das Gewicht des filmbildenden Materials, wasserquellbare Teilchen enthalten sind.

3. Verfahren gemäß Anspruch 1, worin als wäßrige filmbildende Zusammensetzung eine Zusammensetzung verwendet wird, in der 0,5 bis 15 Gew.% und bevorzugt 1 bis 7 Gew.%, bezogen auf das Gewicht des filmbildenden Materials, wasserquellbare Tonteilchen enthalten sind.

4. Verfahren gemäß Anspruch 1, worin die wasserquellbaren Tonteilchen in Form eines trockenen Tonpulvers aufgebracht werden.

5. Verfahren gemäß einem der Ansprüche 1 bis 4, worin als filmbildende Zusammensetzung eine wäßrige Emulsion von Kunststoffbeschichtungsteilchen, ausgewählt aus Teilchen eines Materials der Gruppe bestehend aus Polyvinylacetat, Ethylen-Vinylacetat-Copolymer, Essigsäureestern, Monoglyceridfettsäuren, Polyhydroxyalkanoat, Polysaccharid, Protein, Polyethylen, Poly(meth)acrylat und Mischungen davon, verwendet wird.

6. Verfahren gemäß Anspruch 1, worin als Tonteilchen Ton in der Natriumform mit einem Ionenaustauschvermögen von 30 bis 250 meq/100 g Ton und bevorzugt 50 bis 150 meq/100 g Ton verwendet werden.

7. Verfahren gemäß einem der vorhergehenden Ansprüche, worin das Aufbringen der wäßrigen filmbildenden Zusammensetzung und das Trocknenlassen einige Male wiederholt wird.

8. Emulsion zur Verwendung als wäßrige Zusammensetzung im Verfahren gemäß Anspruch 2, umfassend in einem wäßrigen Medium Teilchen eines filmbildenden Materials und 0,5 bis 25 Gew.%, bezogen auf das Gewicht des filmbildenden Materials, lebensmittelverträglicher wasserquellbarer Tonteilchen, worin die Tonteilchen Teilchen vom Typ Bentonit, Montmorillonit, Saponit, Hectorit, Fluorohectorit, Beidellit, Nontronit, Vermiculit, Halloysit und/oder Stevensit sind, wobei das Montmorillonit in der Natriumform vorliegt und ein Ionenaustauschvermögen von 30 bis 250 meq/100 g Ton aufweist.

9. Emulsion gemäß Anspruch 8, umfassend 0,5 bis 15 Gew.% und bevorzugt 1 bis 7 Gew.%, bezogen auf das Gewicht des filmbildenden Materials, Tonteilchen.

10. Emulsion gemäß Anspruch 8 oder 9, worin die Teilchen des filmbildenden Materials Teilchen eines Materials sind, das ausgewählt ist aus der Gruppe bestehend aus Polyvinylacetat, Ethylen-Vinylacetat-Copolymer (EVA), Essigsäureestern, Monoglyceridfettsäuren, Polyhydroxyalkanoat, Polysacchariden, Proteinen, Polyethylen und Poly(meth)acrylat und Mischungen davon.

11. Emulsion gemäß Anspruch 8, worin die Tonteilchen Tonteilchen in der Natriumform natürlichen und/oder synthetischen Ursprungs sind und ein Ionenaustauschvermögen von 30 bis 250 meq/100 g Ton, bevorzugt 50 bis 150 meq/100 g Ton, aufweisen.

12. Verfahren zur Herstellung einer Emulsion zum Beschichten von Lebensmitteln gemäß einem der Ansprüche 8 bis 11, worin die flächenförmigen Tonteilchen gleichmäßig in einem herkömmlichen Beschichtungsmaterial für Lebensmittel verteilt sind, umfassend filmbildende Teilchen in Wasser in einer Menge von 0,5 bis 25 Gew.%, bezogen auf das Gewicht des filmbildenden Materials.

13. Käse erhältlich gemäß dem Verfahren nach einem der Ansprüche 1 bis 7.

## Revendications

1. Procédé d'enrobage d'un fromage, comprenant les étapes à appliquer à celui-ci une composition aqueuse filmogène et de laisser sécher cette composition, et d'appliquer des particules compatibles avec les produits alimentaires issues d'un matériau apte à gonfler en présence d'eau sous forme de feuille, et spécifiquement des particules d'argile aptes à gonfler en présence d'eau de type bentonite, montmorillonite, saponite, hectorite, fluorohectorite, beidellite, nontronite, vermiculite, halloysite et/ou stevensite.

2. Procédé selon la revendication 1, dans lequel la composition aqueuse utilisée est une émulsion de matériau filmogène dans laquelle 0,5 à 25% en poids, par rapport au poids du matériau filmogène, de particules aptes à gonfler en présence d'eau sont incluses.

3. Procédé selon la revendication 1, dans lequel la composition aqueuse filmogène utilisée est une composition dans laquelle 0,5 à 15% en poids et de préférence 1 à 7% en poids, par rapport au poids du matériau filmogène, de particules d'argile aptes à gonfler en présence d'eau sont incluses.

4. Procédé selon la revendication 1, dans lequel les particules d'argile aptes à gonfler en présence d'eau sont appliquées sous forme de poudre d'argile sèche.

5. Procédé selon l'une quelconque des revendications 1 à 4, dans lequel la composition filmogène utilisée est une émulsion aqueuse de particules d'enrobage plastique choisies parmi les particules d'un matériau appartenant au groupe consistant en l'acétate de polyvinyle, le copolymère d'éthylène et d'acétate de vinyle, les esters d'acide acétique, un monoglycéride d'acides gras, un polyhydroxyalcanoate, un polysaccharide, une protéine, le polyéthylène, un poly(méth)acrylate ainsi que les mélanges de ceux-ci.

6. Procédé selon la revendication 1, dans lequel les particules d'argile utilisées sont des argiles sous forme sodique ayant une capacité d'échange ionique de 30 à 250 meq/100 g d'argile et de préférence de 50 à 150 meq/100 g d'argile.

7. Procédé selon l'une quelconque des revendications précédentes, dans lequel l'application de la composition aqueuse filmogène et le séchage de cette dernière sont répétées plusieurs fois.

8. Emulsion destinée à être utilisée en tant que composition aqueuse dans le procédé selon la revendication 2, comprenant dans un milieu aqueux des particules d'un matériau filmogène et 0,5 à 25% en poids, par rapport au poids du matériau filmogène, de particules d'argile aptes à gonfler en présence d'eau et compatibles avec les produits alimentaires, où les particules d'argile sont des particules de type bentonite, montmorillonite, saponite, hectorite, fluorohectorite, beidellite, nontronite, vermiculite, halloysite et/ou stevensite, la montmorillonite étant sous forme sodique et ayant une capacité d'échange ionique de 30 à 250 meq/100 g d'argile.

9. Emulsion selon la revendication 8, comprenant 0,5 à 15% en poids et de préférence 1 à 7% en poids, par rapport au poids du matériau filmogène, de particules d'argile.

10. Emulsion selon la revendication 8 ou 9, dans laquelle les particules de matériau filmogène sont des particules d'un matériau choisi dans le groupe consistant en l'acétate de polyvinyle, le copolymère d'éthylène et d'acétate de vinyle (EVA), les esters d'acide acétique, un monoglycéride d'acides gras, un polyhydroxyalcanoate, les polysaccharides, les protéines, le polyéthylène et un poly(méth)acrylate et les mélanges de ceux-ci.

11. Emulsion selon la revendication 8, dans laquelle les particules d'argile sont des particules d'argile sous forme sodique d'origine naturelle et/ou synthétique, ayant une capacité d'échange ionique de 30 à 250 meq/100 g d'argile, de préférence de 50 à 150 meq/100 g d'argile.

12. Procédé de préparation d'une émulsion destinée à enrober des produits alimentaires selon l'une quelconque des revendications 8 à 11, dans lequel les particules d'argile sous forme de feuille sont distribuées de façon uniforme dans un matériau d'enrobage conventionnel pour des produits alimentaires, comprenant des particules filmogènes dans de l'eau, en une quantité de 0,5 à 25% en poids, par rapport au poids du matériau filmogène.

13. Fromage pouvant être obtenu à l'aide du procédé selon l'une quelconque des revendications 1 à 7.
